# EUROPÄISCHE PATENTSCHRIFT

(11) **EP 3 491 356 B1**
(45) Veröffentlichungstag und Bekanntmachung des Hinweises auf die Patenterteilung: **16.06.2021**
(21) Anmeldenummer: 17752024.4
(22) Anmeldetag: 24.07.2017
(51) Int. Cl.: G01L 5/16, G01L 5/00, G01L 1/26

(54) **VERFAHREN UND KRAFTMESSPLATTE ZUR MEHRACHSIGEN ERFASSUNG EINWIRKENDER KRÄFTE UND MOMENTE**
METHOD AND FORCE MEASURING PLATE FOR MULTI-AXIS MEASUREMENT OF ACTIVE FORCES AND MOMENTS
PROCÉDÉ ET PLAQUE DE MESURE DE FORCES POUR DÉTECTION MULTIAXIALE DE FORCES ET COUPLES EN ACTION

(30) Priorität: 01.08.2016 DE 102016114205
(43) Veröffentlichungstag der Anmeldung: 05.06.2019
(73) Patentinhaber: Nuton GmbH, 10179 Berlin (DE)
(72) Erfinder: DE MENDOZA, Adrián González, 10965 Berlin (DE)
(74) Vertreter: Patentanwälte Bauer Vorberg Kayser
(86) Internationale Anmeldenummer: PCT/EP2017/068579
(87) Internationale Veröffentlichungsnummer: WO 2018/024518

(56) Entgegenhaltungen:
- JP-A- H0 351 732
- US-A- 4 493 220
- US-B1- 6 354 155

## Beschreibung

### Technisches Gebiet

Die Erfindung betrifft eine Kraftmessplatte zur mehrachsigen Erfassung einwirkender Kräfte und Momente. Derartige Kraftmessplatten werden in der Produktionstechnik und für Mess- und Prüfstände verwendet. Die Erfindung betrifft ferner ein Verfahren zur mehrachsigen Erfassung einwirkender Kräfte und Momente mit einer solchen Kraftmessplatte.

### Hintergrund der Erfindung

Das Ziel der vorliegenden Erfindung ist, es eine mehrachsige Kraftmessplatte zu schaffen, die sich insbesondere für die dynamische Erfassung von Zerspanungskräften an Fräs-, Dreh- oder Schleifmaschinen eignet. Mehrachsige Kraftmessplatten sind bekannt, jedoch werden an Kraftmessplatten für die Erfassung von Zerspanungskräften besonders hohe Anforderungen gestellt. Die Wichtigsten davon sind:
- hohe Steifigkeit und hohe Eigenfrequenz
- hohe Messgeschwindigkeiten bzw. hohe Datenraten
- hohe Überlasttoleranz
- hohe Auflösung
- geringes Kanal-Übersprechen
- gute Nullpunktstabilität
- hohe Wiederholgenauigkeit
- wartungsarm
- kostengünstig

Eine hohe Steifigkeit und eine hohe Eigenfrequenz ergeben sich aus der Notwendigkeit, die zu bearbeitenden Werkstücke fest und schwingungsarm zu spannen, um auch bei großen Zerspanungskräften hohe Oberflächengüten und Genauigkeiten zu erzielen. Auch soll der Zerspanvorgang sich im Ergebnis möglichst wenig von einem Zerspanvorgang auf einer konventionellen Maschine ohne Kraftmessplatte unterscheiden.

Die Forderung nach hohen Messgeschwindigkeiten ergibt sich aus dem Wunsch, eine CNC-Maschine innerhalb von Millisekunden oder sogar Mikrosekunden auf ein gemessenes Kraftereignis reagieren zu lassen, etwa beim Antasten, der Kollisionskontrolle oder der adaptiven Vorschubanpassung. Außerdem kann eine hohe Auflösung helfen, die Qualität des Spanbildungsprozesses beim Fräsen auch bei hohen Drehzahlen und mehrschneidigen Werkzeugen zu beurteilen oder zu dokumentieren.

Eine hohe Überlasttoleranz ist erforderlich, um zu verhindern, dass Kollisionen z.B. aufgrund einer fehlerhaften Programmierung die Kraftmessplatte zerstören. In der Regel steht diese Forderung im Konflikt mit der Forderung nach einer hohen Auflösung, da ein hoher Anteil der messbaren Verformungen als Sicherheitsreserve verwendet werden muss, sofern nicht zusätzliche Maßnahmen zur Überlastsicherung getroffen werden können. Erschwerend kommt hinzu, dass die Auslegung des Messbereichs sich naturgemäß an den höchsten Kräften orientiert, welche von der Kraftmessplatte zuverlässig erfasst werden sollen. Da an einem CNC-Bearbeitungszentrum üblicherweise aber ein großes Spektrum von Bearbeitungsprozessen mit sehr unterschiedlichen und auch sehr geringen Bearbeitungskräften beurteilt können werden soll, kann die erzielbare Auflösung kaum je groß genug sein.

Für die Beurteilung von Kräften und Momenten an Fräsmaschinen ist es häufig wichtig, die Größe der bewegten Massen zu kennen, um Überlastsituationen zu vermeiden und um Rückschlüsse auf die erwartbare Eigenfrequenz ziehen zu können. Durch die Eigenfrequenzanalyse können einerseits Drehzahlen vermieden werden, die zu einem Aufschwingen des Systems führen, andererseits hilft die Kenntnis der Eigenfrequenz bei der Analyse und Bewertung der Messergebnisse. Die auf dem Bearbeitungstisch einer Fräsmaschine aufliegende Masse verändert sich jedoch durch den laufenden Zerspanungsprozess oder durch wechselnde Spannmittel regelmäßig, was zu einer Verschiebung der Eigenfrequenz führt und eine Beurteilung erschwert, sofern diese Größenveränderung nicht erfasst werden kann. Aus diesem Grund sind Kraftmessplatten mit einer geringen Nullpunktdrift wünschenswert, die Masseveränderungen auch über längere Zeiträume mit ausreichender Genauigkeit detektieren.

Die genaue Kenntnis der aufliegenden Massen ist jedoch auch aus einem anderen Grund von wesentlicher Bedeutung. Um von Fremdeinflüssen möglichst unbeeinflusste Messungen zu ermöglichen, befindet sich die Kraftmessplatte idealerweise auf einem starren unbeweglichen Maschinenbett, da Bewegungen der Kraftmessplatte aufgrund der Massenträgheit der mitbewegten, aufliegenden Massen zu überlagerten Messausschlägen führen, welche die Analyse des Zerspanungsprozesses stören. Ein weiterer masseabhängiger Einfluss ist die Richtung der einwirkenden Schwerkraft. Bei einer Auflagemasse von beispielsweise 200 kg und einer Veränderung der Tischneigung um lediglich 0,5° relativ zur Schwerachse verschiebt das den Nullpunkt bereits um etwa 17 N.

Da bei einer realen Zerspanungsmaschine große Massen sehr dynamisch bewegt werden und sich solche Maschinen üblicherweise in industriellen Umgebungen befinden, in denen von benachbarten Produktionsprozessen weitere Erschütterungen und Bewegungen zu erwarten sind, liegt selbst bei einer vermeintlich unbewegten Kraftmessplatte der von diesen Störgrößen verursachte Fehler in der Regel deutlich über der Auflösungsgrenze. Wird der Tisch dagegen mitbewegt und gegebenenfalls, wie bei vier- und fünfachsigen Bearbeitungen üblich, zusätzlich gekippt, ist eine genaue Zerspanungsanalyse ohne Kenntnis der bewegten Massen nahezu unmöglich.

Kraftmessplatten, welche als Standardausstattung in Fräsmaschinen integriert werden sollen, müssen zu den genannten Anforderungen noch wartungsarm, kostengünstig herstellbar und einfach montierbar sein. Außerdem müssen sie unanfällig gegen Späne, Stäube und Flüssigkeiten sein.

### Stand der Technik

Am Markt haben sich bisher für die Erfassung von Zerspanungskräften piezoelektrische Kraftmessplatten etabliert, wie sie beispielsweise in der EP 0 806 643 B1 beschrieben sind. Sie zeichnen sich vor allem durch eine hohe Steifigkeit und eine hohe nominelle Auflösung aus. Mit solchen Systemen können jedoch keine statischen Messungen über Stunden oder Tage durchgeführt werden, ohne das System zwischendurch neu zu tarieren, da der vom Piezokristall aufgrund des einwirkenden Drucks erzeugte Ladungsunterschied das Bestreben hat, sich dem Ladungsniveau seiner elektrischen Umgebung anzugleichen und dies trotz aufwendiger Isolationsmaßnahmen nicht vollständig verhindert werden kann. Verändert sich aber der Ladungszustand, verändert sich auch die Messgröße. Dies führt in der Praxis zu einer unvorhersehbaren Nullpunktdrift. Die sehr aufwendigen Isolationsmaßnahmen machen insbesondere die Verkabelung piezoelektrischer Systeme teuer und fehleranfällig. Aufliegende Massen können nur bestimmt werden, wenn die bewegte Masse zum Zeitpunkt der Tarierung des Systems bekannt ist und der Auswerteeinheit mitgeteilt wird. Die unvermeidliche Nullpunktdrift bei piezoelektrischen Systemen führt aber bereits nach relativ kurzer Zeit zu einer großen Messunsicherheit.

Piezoelektrische Mehrachssensoren sind in Bezug auf ihr Übersprechverhalten anderen Sensoren oft unterlegen, wie dies auch aus dem Beschreibungstext zur WO 2013/188989 A1 hervorgeht, welche eine piezoelektrische Kraftmessplatte mit verbesserten Übersprecheigenschaften beschreibt. Ein Übersprechen von bis zu 5% des Nutzsignals auf die anderen Kanäle ist bei piezoelektrischen Sensoren keine Seltenheit und relativiert den Vorteil der hohen Auflösung.

Weiterhin müssen piezoelektrische Systeme unter Vorspannung betrieben werden. Eine Änderung dieser Vorspannung führt ebenfalls zu einer Nullpunktdrift. Eine solche Änderung tritt aber leicht aufgrund thermischer Einwirkungen auf, da das mechanische Spannelement, welches die Vorspannung erzeugt, aufgrund seines Längenausdehnungsverhaltens bei wechselnder Temperatur seine Vorspannung verändert. Auf Zerspanungsmaschinen wird durch die Zerspanungsarbeit, durch elektrische Systeme, Lagerreibung und Motoren viel unerwünschte Wärme produziert, die lokal entsteht und sich langsam in der Maschine ausbreitet. Diese lokalen Wärmeentwicklungen werden in der Technik durch unterschiedlichste Maßnahmen bekämpft oder kompensiert, um die Maßhaltigkeit der Werkstücke zu gewährleisten und die Standzeiten der Werkzeuge zu erhöhen. Der Erwärmung des Werkstückes und des Werkzeuges wird dabei üblicherweise durch das Zuschalten von Kühlmittel entgegengewirkt. Hierdurch entstehen plötzliche Temperatursprünge und unkalkulierbare Temperaturverläufe innerhalb des Vorspannelements des piezoelektrischen Sensors, welche ebenfalls starke negative Auswirkungen auf die Nullpunktstabilität und Wiederholgenauigkeit piezoelektrischer Sensoren haben.

Obwohl sich mit den heute verfügbaren piezoelektrischen Sensoren für die Beurteilung schneller dynamischer Prozesse bei entsprechendem Aufwand bereits eine für die experimentelle Zerspanungsanalyse akzeptable Nullpunktdrift erreichen lässt, sind aufgrund der vorgenannten Schwierigkeiten absolute Beurteilungen aufliegender Massen und sich über längere Zeiträume langsam verändernder Lasten nicht oder nur sehr eingeschränkt beurteilbar. Die Messunsicherheiten, die sich daraus ergeben, führen in der Produktionspraxis zu großen Einschränkungen bei der Nutzbarkeit solcher Systeme, obwohl sich dynamische Änderungen der Messgrößen mit piezoelektrischen Sensoren in unerreichter Auflösung und Geschwindigkeit erfassen lassen.

Als Alternative bieten sich Kraftmessplatten auf der Basis von Dehnmessstreifen (DMS) an, welche eine wesentlich bessere Nullpunktstabilität aufweisen. Dehnmessstreifen sind sehr viel einfacher herzustellen, zu verarbeiten, anzuschließen und zu kalibrieren als sensorgeeignete Piezokristalle und bieten daher erhebliche Kostenvorteile. Moderne digitale Messverstärker erlauben Datenraten von 50kHz und mehr und sind damit inzwischen ausreichend schnell für die detaillierte Analyse von Zerspanungsprozessen. Allerdings erreichen DMS-basierte Sensoren bisher nicht die von den piezoelektrischen Kraftmessplatten bekannten Steifigkeiten und Auflösungen.

Mehrachsige Kraftmesseinrichtungen auf der Basis von Dehnmessstreifen sind in vielfältiger Ausführung bekannt, als Beispiel seien hier die US 6 354 155 B1, die JP H03 51732 A und die US 4,493,220 angeführt, welche einige typische Eigenschaften handelsüblicher mehrachsiger Kraftmessplatten zeigen.

US 4,493,220 zeigt eine mehrachsige Kraftmessplatte, bei der die Grund- und Deckplatte über vier gleichartige Kraftmesszellen, im Folgenden Sensorfüße genannt, miteinander verbunden sind. Jeder Sensorfuß besitzt einen zylindrischen Rohrabschnitt, der als Verformungskörper dient, auf denen jeweils mehrere Dehnmessstreifen in unterschiedlicher Orientierung aufgebracht sind.

Die Dehnmesstreifen sind dabei so angeordnet, dass seitlich einwirkende Kräfte in X- oder Y-Richtung eine Anordnung von lotrecht zueinander orientierten Scher-DMS verformen, was eine einfachere Auswertung und Kalibrierung ermöglicht. Die DMS für die Z-Richtung sind Kombinationen von Längs- und Quer-DMS, welche in Achsrichtung des Rohrabschnitts angeordnet sind. Kraftmessplatten dieses Typs werden beispielsweise von Advanced Mechanical Technology Inc. (AMTI) hergestellt. Vergleicht man die konstruktiven Merkmale und die dokumentierten technischen Eigenschaften dieser Kraftmessplatten mit den piezoelektrischen Systemen werden, einige Unterschiede deutlich, welche die Nutzbarkeit derartiger Systeme auf Zerspanungsmaschinen ebenfalls einschränken. Ein offensichtlicher Nachteil ist die deutlich verringerte Steifigkeit des Systems verbunden mit einer geringeren Auflösung.

Die von der Firma AMTI in US 4,493 220 beschriebene Kraftmessplatte besitzt außerdem den Nachteil, dass die Steifigkeit der als Verformungskörper dienenden Rohrabschnitte in Z-Richtung um ein Mehrfaches höher als in Querrichtung (X, Y) ist und zudem die Längs-/Querkombinationen der Dehnmessstreifen in Achsrichtung des Rohrabschnittes nur etwa 65% der Signalausbeute liefern wie die Scherkombinationen in Querrichtung (X/Y), so dass sich ein Gesamtunterschied in der Empfindlichkeit zwischen X/Y und Z von etwa 400% ergibt. Dies ist für eine feinfühlige Analyse von Zerspanungsvorgängen jedoch eine schwerwiegende Einschränkung.

Piezoelektrische Systeme bieten dagegen den Vorteil, dass man sich in den gerade interessierenden Messbereich gleichsam hineinzoomen kann. Zwar sind bei Kraftmessplatten auch Unterschiede in den Steifigkeiten der Achsen konstruktiv unvermeidbar, jedoch ermöglicht die freie Messbereichswahl die Wahl einer gleichen Auflösung in allen drei Kraft- und Momentrichtungen. Systeme auf der Basis von Dehnmessstreifen können diesen prinzipiellen Nachteil nur ausgleichen, indem sie über den gesamten Messbereich eine hervorragende Auflösung liefern.

Bei der in US 4,493,220 beschriebenen Kraftmessplatte werden sechs Wheatstonebrücken aufgebaut. Jede der Brücken repräsentiert dabei einen der sechs Kanäle F_{X}, F_{Y}, F_{Z}, M_{X}, M_{Y} oder MZ. In jeder der sechs Wheatstonebrücken sind Dehnmessstreifen aller vier Sensorfüße in jeweils einer gemeinsamen Brücke verschaltet. In der Brücke Fz sind dies 16 DMS (4x4) und in allen anderen Brücken 8 DMS (4x2). Diese Brückenverschaltung ermöglicht eine direkte Messung jeder Kraftkomponente in je einer eigenen Brücke, darüber hinaus bietet sie eine gute Übersprechdämpfung zwischen den Kanälen und ist eingeschränkt temperaturkompensiert.

In Bezug auf die Verwendung in Zerspanungsmaschinen und die dort auftretenden Temperaturschwankungen ergeben sich jedoch Nachteile bei einer ungleichen Erwärmung der Grund- und der Deckplatte eines solchen Aufbaus. Um diesen Zusammenhang zu verdeutlichen, denke man sich eine Kraftmessplatte mit folgenden Eigenschaften:
- der Abstand zwischen den Sensorfüßen beträgt 200 mm zueinander
- Grund- und Deckplatte bestehen aus Aluminium
- Die Rohrabschnitte sind im Interesse einer hohen Steifigkeit kurz gehalten, eine Verformung in Querrichtung von 0,01mm der Deckplatte zur Grundplatte entspricht dabei dem nominellen Vollausschlag (100% Kraft) der Kraftmessplatte, eine größere Verschiebung würde zu einer dauerhaften Verformung der rohrartigen Verformungszone führen.
- Durch die eingebrachte Zerspanungsenergie weist die Deckplatte nach einiger Zeit einen Temperaturunterschied zur Grundplatte von 5°C auf.

Ausgehend von einem Temperaturausdehnungskoeffizienten von 23 x 10⁻⁶ für Aluminium wächst in diesem Beispiel die Deckplatte bei einer Temperaturdifferenz von 5° zwischen den Sensorfüßen um 0,023 mm. Dies entspricht einer Querverformung der rohrartigen Verformungszone um mehr als 0,01 mm pro Seite und könnte damit bereits eine plastische Verformung bewirken. Hinzu kommen jedoch noch die einwirkenden Zerspanungskräfte. Die verwendete Brückenschaltung aus der US 4,493,220 mittelt die auf die Einzelsensoren wirkenden Kräfte jedoch, wodurch die Belastung der Sensoren nicht zu einer Verstimmung der Brücke führt und also unbemerkt bleibt. Im Ergebnis reduziert also ein Temperaturunterschied zwischen Deckplatte und Grundplatte in jedem Fall den zur Verfügung stehenden Messbereich. Im genannten Beispiel stehen bereits bei einer Temperaturdifferenz von 1°C nur noch 80% des nominellen Messbereichs zur Verfügung.

Dieser Zusammenhang gilt uneingeschränkt auch für die meisten piezobasierten Kraftmessplatten, wodurch deren Verwendung auf den kurzzeitigen oder experimentellen Einsatz beschränkt ist und sie für den Einsatz in produktiven Zerspanungsmaschinen mit dauerhaft hohem Spanvolumen ungeeignet zu sein scheinen.

Auch in einem anderen Zusammenhang bietet der in der US 4,493,220 beschriebene Aufbau die Möglichkeit einer unerkannten Überlastung. Die in Z-Richtung eingeleiteten Lasten werden unabhängig von ihrem Einleitungspunkt in der Wheatstonebrücke gemittelt. Wird aber eine hohe Kraft direkt über einem einzelnen Sensorfuß in die Kraftmessplatte eingeleitet, kann es zur Überlastung dieses Fußes kommen, ohne dass die nominelle Überlastgrenze des Tisches erreicht wird. In der Realität ist die Maximallast in der Mitte einer solchen Kraftmessplatte am größten und nimmt zu den Rändern immer weiter ab. Wird ein einzelner Sensorfuß überlastet, kann dies vom Messsystem nicht zuverlässig erkannt werden.

Überlastsituationen in Zerspanungsmaschinen sind nicht völlig vermeidbar, da es durch Bediener- oder Maschinenfehler zu Kollisionen kommen kann, in der Regel zwischen Werkzeug und Werkstück oder Spannmittel. Aufgrund der hohen Massen und der großen Bewegungsenergie kann es hierbei zu zerstörenden Belastungen auf die Sensoren kommen. Bekannte Kraftmessplatten liefern für dieses Problem keine überzeugende Lösung. Eine Überdimensionierung der Sensoren, welche sie unempfindlicher gegen Kollisionen machen würde, führt unvermeidlich zu einer Reduzierung der verfügbaren Auflösung.

Eine Erfassung der Kräfte F_{X}, F_{Y} und F_{Z} sowie die Erfassung des wirksamen Drehmoments am Werkzeug sind in der Regel ausreichend für die Zerspanungsanalyse. Zwar kann das Drehmoment am Werkzeug unter gewissen Voraussetzungen indirekt auch mit Hilfe der Kraftmessplatte erfasst werden, jedoch wird in der Praxis eine direkte Erfassung des Drehmoments an der Werkzeugspindel die bevorzugte Lösung darstellen.

Dennoch ist die Erfassung von Momenten an der Kraftmessplatte in vielen Fällen sinnvoll oder sogar unabdingbar, um Überlasten feststellen zu können. Unter Einsatz eines ausreichend großen Hebelarms können bereits geringe Kräfte zu einer Deformation oder Zerstörung der Verformungskörper führen, ohne dass die wirksamen Kräfte in X- Y- oder Z-Richtung die nominellen Lastgrenzen überschreiten. Die realen Lastgrenzen einer Kraftmessplatte sind somit keine fixen Werte, sondern von der Lage des Angriffspunktes abhängig. Eine Annäherung an die Überlastgrenze kann von der Auswerteeinheit daher nur erkannt werden, wenn Kräfte und Momente gleichzeitig erfasst und verarbeitet werden.

### Darstellung der Erfindung

Eine erfindungsgemäße Kraftmessplatte besteht aus einer Grundplatte und einer Deckplatte, welche über mehrere rohrartige Sensorfüße miteinander verbunden sind. Die Sensorfüße besitzen jeweils einen Messkörper mit einer rohrartigen Verformungszone, auf der sich Dehnmessstreifen zur Erfassung von Verformungen in Längs- und Querrichtung befinden. Die Verformungen der rohrartigen Verformungszone werden dabei durch die Kräfte und Momente hervorgerufen, die auf die Deckplatte einwirken. Dieser Aufbau wird verwendet, um eine mehrachsige Kraftmessplatte zu schaffen, die sich für die dynamische Erfassung von Zerspanungskräften an Fräs-, Dreh- oder Schleifmaschinen eignet.

Die Aufgabe der vorliegenden Erfindung ist, es eine Kraftmessplatte der genannten Art zu schaffen, die eine möglichst hohe Auflösung in allen Achsrichtungen mit einer hohen Überlastsicherheit verbindet. Aufgabe der Erfindung ist es ferner, ein geeignetes Verfahren zur mehrachsigen Erfassung einwirkender Kräfte und Momente mit einer solchen Kraftmessplatte bereitzustellen.

Diese Aufgabe wird erfindungsgemäß durch ein Verfahren gemäß Anspruch 1 und eine Kraftmessplatte gemäß Anspruch 2 gelöst.

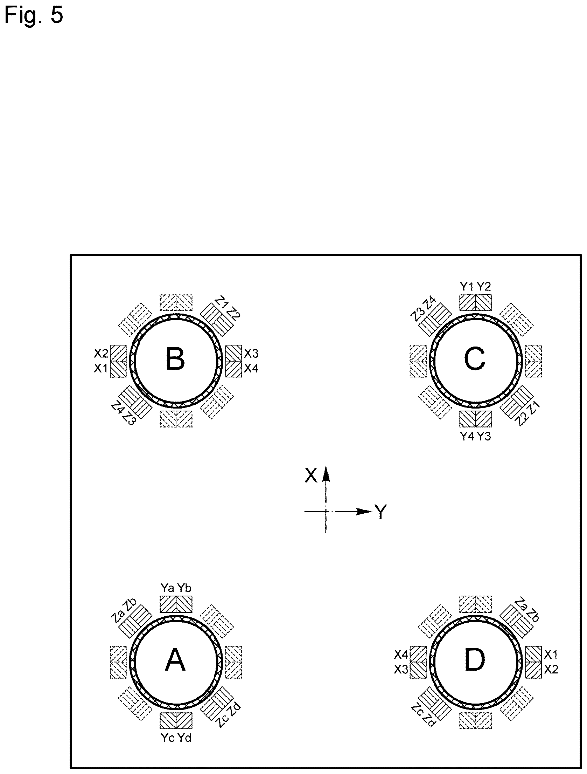

Die Aufgabe wird dabei gelöst, indem die in Z-Richtung lotrecht auf die Deckplatte der Kraftmessplatte einwirkenden Belastungen für jeden Sensorfuß einzeln erfasst und in einer angeschlossenen Auswerteeinheit sowohl einzeln als auch gemeinsam beurteilt werden. Dabei entspricht die Summe der gemessenen Einzellasten der Kraft Fz. Durch den Vergleich der Belastungen der vier Sensorfüße in der Auswerteeinheit lässt sich außerdem eine Aussage über die einwirkenden Momente M_{X} und M_{Y} treffen. Um die Kräfte F_{X}, F_{Y} und das Drehmoment Mz zu erfassen, wird jeder von vier Sensorfüßen mit mindestens je einer weiteren Vollbrücke zur Erfassung von Scherkräften ausgerüstet und in vier weiteren Messverstärkerkanälen ausgewertet. Die zu diesen Vollbrücken gehörenden je vier Scherdehnmessstreifen sind auf den Rohrabschnitten der sich jeweils diagonal gegenüberliegenden beiden Sensorfüße gleich und zu Ihren Nachbarn um 90° verdreht orientiert. Durch die Zusammenschau der Messwerte dieser vier Vollbrücken lassen sich die Kräfte F_{X} und F_{Y} und das Drehmoment M_{Z} ermitteln. Eine genauere Beschreibung dieser Anordnung findet sich in den Beschreibungen der Figuren 5 bis 8. Gegenüber der zum Stand der Technik gehörenden Lösung gemäß der US 4,493,220, bei der den Kraftkomponenten F_{Z}, M_{X} und M_{Y} je eine eigene Wheatstonebrücke zugeordnet ist, deren Einzel-DMS sich auf vier Sensorfüße verteilen, ermöglicht eine erfindungsgemäße Lösung eine deutlich höhere Auflösung in Z-Richtung und ist darüber hinaus in der Lage, Überlastungen einzelner Sensorfüße zu erkennen.

Diese Erfindung bietet gegenüber der in der US 4,493,220 beschriebenen Lösung eine Reihe von Vorteilen:
1. Die Anzahl der Dehnmessstreifen auf den Messkörpern reduziert sich und in Folge der Aufwand für die Positionierung, Verklebung und den Anschluss der Dehnmessstreifen.
2. Bei der zum Stand der Technik gehörenden Lösung wurden in den Wheatstone-Brücken in jedem Brückenquadranten zwei Dehnmessstreifen in Reihe geschaltet. Dies führt dazu, dass nur noch die Hälfte der von den Messverstärkern gelieferten Speisespannung bei den Einzel-DMS ankommt. Dies könnte zwar theoretisch durch eine Verdopplung der Speisespannung ausgeglichen werden, jedoch liefern handelsübliche Messverstärker selten mehr als 10V Speisespannung. Will man jedoch im Interesse einer hohen Auflösung das ganze Potential der Speisespannung nutzen, ist die Reihenschaltung nachteilig. Bei einer erfindungsgemäßen Lösung ist eine Reihenschaltung von DMS nicht erforderlich.
3. Bei der zum Stand der Technik gehörenden Lösung ist den Kraftkomponenten F_{X} und F_{Y} je ein Messverstärkerkanal zugeordnet. Dieser liefert 100% des Signalpegels. Bei einer erfindungsgemäßen Lösung liefern mindestens je zwei redundant ausgeführte Scherkombinationen pro Kraftrichtung das Nutzsignal. Durch die zweifache Redundanz erhöht sich die Gesamtauflösung gegenüber der zum Stand der Technik gehörenden Lösung etwa um den Faktor 1,4. Ist die unter Punkt 2 beschriebene Erhöhung der Speisespannung nutzbar, lässt sich diese Auflösung noch einmal verdoppeln.
4. Das auf die Deckplatte einwirkende Drehmoment M_{Z} wird ebenfalls aus den Messwerten der unter Punkt 3 beschriebenen vier Scherkombinationen abgeleitet. Hier liefert eine erfindungsgemäße Lösung gegenüber dem Stand der Technik durch die vierfache Redundanz und die mögliche Erhöhung der Speisespannung eine ebenfalls deutlich erhöhte Auflösung.
5. Die Verkabelung der Sensorfüße gestaltet sich erheblich einfacher, da pro Sensorfuß lediglich zwei Vollbrücken mit jeweils vier Litzen angeschlossen werden müssen. Bei der zum Stand der Technik gehörenden Lösung werden die beiden Anschlüsse für jeden Einzel-DMS aus dem Sensorfuß herausgeführt und im Messverstärker zu den Vollbrücken für die sechs Kraftkomponenten verschaltet. Dies bedeutet, dass bei der in der US 4,493,220 vorgeschlagenen Lösung mit 14 DMS pro Sensorfuß bis zu 28 Litzen aus dem Sensorfuß herausgeführt werden müssen.
6. Bei einer erfindungsgemäßen Lösung lässt sich jeder Sensorfuß einzeln kalibrieren, da die Vollbrücken intern verschaltet sind und nicht erst durch den Zusammenschluss mit anderen Sensorfüssen aufgebaut werden müssen. Bei einer erfindungsgemäßen Lösung lassen sich defekte Sensorfüße hierdurch auch leichter identifizieren und auswechseln.
7. Durch die Einzelauswertung der insgesamt acht Kanäle erhöht sich die Produktivität einer mit einer erfindungsgemäßen Kraftmessplatte und einer lastabhängigen Vorschub- und/oder Drehzahlregelung ausgestatteten Maschine, da diese sich unabhängig vom Kraftangriffspunkt jederzeit bis nahe an die Lastgrenzen der Kraftmessplatte betreiben lässt, ohne dass die Gefahr einer Überlastung besteht. Dies gewährleistet gleichzeitig eine hohe Betriebssicherheit und entlastet den Bediener von der praxisfernen Notwendigkeit, die zulässigen Lasten für jede eintretende Belastungssituation einzeln abzuschätzen.

Eine hohe Auflösung ist aber nur dann sinnvoll, wenn Störeinflüsse soweit minimiert werden können, dass auch ein sehr kleines Kraftereignis eindeutig dem Zerspanungsprozess zugeordnet werden kann. Eine auf einer Zerspanungsmaschine befestigte Kraftmessplatte ist aber üblicherweise vielfältigen Krafteinwirkungen ausgesetzt, die nicht in direktem Zusammenhang mit dem Zerspanungsprozess stehen. Störende Krafteinwirkungen können zum Beispiel hervorgerufen werden von:
- den Bewegungen des Maschinenständers (Vibrationen, Erschütterungen, Kippbewegungen)
- einer veränderlichen Wirkrichtung der Schwerkraft (insbesondere bei Schwenktischen)

Um die Störeinflüsse auf das Messergebnis zu reduzieren, müssen die beschleunigten Bewegungen der Kraftmessplatte im Raum, deren Rotationsgeschwindigkeit und die Schwerkraftrichtung kontinuierlich erfasst werden. Aus diesem Grund ist die Grundplatte der Kraftmessplatte in einer vorteilhaften Ausführungsform der Erfindung mechanisch mit Beschleunigungssensoren und/oder Drehratensensoren gekoppelt. Die Messwerte dieser Sensoren werden kontinuierlich erfasst und der Auswerteeinheit zugeführt. Unter Berücksichtigung der aufliegenden Masse, deren Massenschwerpunkt und ggf. deren Trägheitsmoment kann die Auswerteeinheit die von den Störeinflüssen hervorgerufenen Kraftwirkungen rechentechnisch ermitteln und die Ausgabewerte für jede Messgröße (Kräfte und Momente) entsprechend korrigieren.

Die auf der Deckplatte der Kraftmessplatte aufliegende Masse, deren Massenschwerpunkt und ggf. dessen Trägheitsmoment, können (sofern sie nicht bekannt sind oder anderweitig erfasst werden können) durch die Kraftmessplatte selbst erfasst werden, indem diese einen vorgegebenen Bewegungszyklus abfährt. Die dabei entstehenden Kraftwirkungen können unter Berücksichtigung der Bewegungsrichtung und Beschleunigung zur Ermittlung der fraglichen Werte herangezogen werden. Ein solcher Bewegungszyklus kann zeitlich sehr kurz gehalten werden und beispielweise nach jedem Werkzeugwechsel ausgeführt werden, um die Kompensation der Störeinflüsse jederzeit auf der Basis aktueller Bezugsgrößen ausführen zu können.

Es wurde bereits erörtert, welche Einflüsse wechselnde Temperaturen auf die Messgenauigkeit, den Messbereich und die Lastgrenzen haben können. Kritische Temperaturänderungen werden daher entsprechend einer vorteilhaften Weiterbildung der Erfindung mit Hilfe mindestens eines Temperatursensors in der Grundplatte und eines Temperatursensors in der Deckplatte erfasst. Die Differenz der Temperaturen von Deckplatte und Grundplatte wird in der Auswerteinheit berechnet. Mit dieser Information kann die Auswerteeinheit dann beurteilen, ob und wie sehr diese Temperaturdifferenz zu einer Vorbelastung der Sensorfüße in X- und Y-Richtung und damit zu einer Reduzierung der Lastgrenzen führt. Die Kenntnis der aktuellen Lastgrenzen kann die Maschinensteuerung beispielsweise dazu verwenden, die zulässigen Lasten auf unkritische Werte zu reduzieren und die Drehzahlen und Vorschübe diesen veränderten Lastgrenzen anpassen. Idealerweise werden die Temperaturen der Grund- und der Deckplatte von jeweils mehreren Temperatursensoren erfasst, die in einer Matrix auf den Platten angeordnet sind. Hierdurch kann eine lokale Temperaturänderung in der Kraftmessplatte erkannt und von der Auswerteinheit anders beurteilt werden als eine Temperaturänderung, die auf alle Sensoren in gleichem Maße einwirkt.

Alternativ oder ergänzend zu der vorbeschriebenen Temperaturerfassung verfügt eine bevorzugte Ausführungsform der Erfindung über eine Einrichtung zur Temperierung der Kraftmessplatte. Das ideale Ziel dieses Systems ist es, die Temperatur der Deckplatte und der Grundplatte möglichst gleich und möglichst stabil zu halten. Die Temperatur der Grundplatte wird dabei in der Regel von der Temperatur der Aufspannfläche bestimmt, wobei die Temperatur der Deckplatte in hohem Maße von der Art des Zerspanungsprozesses und der Spannmittel abhängt. Bei einem moderaten Wärmeeintrag in die Deckplatte können passive Systeme, wie z.B. Wärmerohre, für den Temperaturausgleich ausreichend sein. Für höhere Wärmeeinträge besitzt eine vorteilhafte Ausführungsform der Erfindung eine mittels einer angeschlossenen Pumpe flüssigkeitsdurchströmte Deckplatte. Im einfachsten Fall wird die Flüssigkeit dabei einem Tank entnommen, welcher sich im Maschinensockel befindet und/oder an diesen thermisch gut angekoppelt ist. Ist die Aufspannfläche der Kraftmessplatte ebenfalls thermisch mit dem Maschinensockel verbunden, wird die umlaufende Flüssigkeit für einen ständigen Temperaturausgleich zwischen der auf die Aufspannfläche aufgesetzten Grundplatte und der flüssigkeitsdurchströmten Deckplatte sorgen und eine sehr träge Temperaturänderung bewirken, da die eingetragene Wärme den gesamten Maschinensockel aufheizen muss.

Entsprechend einer weiteren Ausführungsform der Erfindung kann die der Deckplatte zugeführte Flüssigkeit auch aktiv und in Abhängigkeit von der Grundplattentemperatur temperiert werden. Hierzu messen ein oder mehrere Temperatursensoren die Grundplattentemperatur, wobei der oder die Messwerte für die Steuerung der Vorlauftemperatur des Kühlkreislaufes genutzt werden. Vorzugsweise werden Vor- und Rücklauftemperatur des Kühlmediums ebenfalls gemessen und die Vorlauftemperatur so eingestellt, dass der Mittelwert von Vor- und Rücklauftemperatur der Grundplattentemperatur gleicht.

Wird die Deckplatte wie oben beschrieben mit einer Matrix aus Temperatursensoren versehen, kann alternativ auch deren Mittelwert verwendet werden, um die Vorlauftemperatur zu steuern.

Da insbesondere in Zerspanungsmaschinen nicht immer sichergestellt werden kann, dass keine Lastereignisse eintreten, welche die Sensorfüße überlasten würden, ist eine vorteilhafte Weiterbildung der Erfindung mit einer passiven Überlastsicherung ausgestattet. Diese besteht im Wesentlichen aus festen Endanschlägen, welche die Verformung der rohrartigen Verformungszone auf den elastischen oder ggf. den plastischen Bereich begrenzen. Mechanische Anschläge, welche die Verformungen der rohrartigen Verformungszone innerhalb des elastischen Bereichs des Messkörpers begrenzen, sind bei einer erfindungsgemäßen Kraftmessplatte anspruchsvoll, da die Verformungsamplituden unter Nennlast deutlich unter 0,02mm liegen können. Derart enge Spalte zwischen den Anschlagsflächen sind nicht nur schwer herstellbar, sie sind überdies in ihrer Wirkung von Spaltkorrosion, eindringenden Fremdmedien und Temperatureinflüssen bedroht.

Um das Eindringen von Fluiden und Staub in den Spalt zu verhindern, sind die Anschläge entsprechend einer vorteilhaften Weiterbildung der Erfindung mit einer nach außen wirksamen elastischen Dichtung versehen. Weiterhin bestehen die Anschlagflächen aus einem korrosionsbeständigen Material wie Edelstahl oder Hartmetall und/oder sind mit einer korrosionshemmenden Beschichtung versehen. Zusätzlich kann die effektive Spalttiefe verringert werden, indem die Anschlagflächen mit Nuten durchzogen werden, was die Korrosionsprozesse hemmt. Der Spaltraum und ggf. die Nuten können entsprechend einer vorteilhaften Weiterbildung zusätzlich mit einem korrosionshemmenden Fluid gefüllt sein.

Entsprechend einer weiteren vorteilhaften Ausführungsform der Erfindung ist diese mit einer aktiven Überlastsicherung ausgestattet. Diese verfügt über ein System von Riegeln, welche im Falle einer auftretenden Überlast sehr schnell in entsprechende Passstellen in der Deckplatte eingeschoben werden, damit deren weitere Bewegung blockieren und so eine zerstörerische Verformung der rohrartigen Verformungszone vermeiden. Um eine ausreichend schnelle Reaktion dieser Riegel zu ermöglichen, verfügt eine erfindungsgemäße Kraftmessplatte über schnelle Sensoren, welche eine Verformung in dem kritischen Bereich innerhalb von Mikrosekunden erkennen können. Die Riegel selbst sind mit einem vorgespannten Federelement versehen, welches sie in Richtung der Passstellen drückt. Während des regulären, also nicht blockierten, Betriebes befinden sich die Riegel in geöffneter Stellung und werden dort durch geeignete Haltevorrichtungen festgehalten. Diese Haltevorrichtungen können sehr schnell durch einen elektrischen Impuls entfernt oder unwirksam gemacht werden, so dass die Riegel in die Passstellen einschießen und die Deckplatte an einer weiteren Bewegung hindern. Dieses System ist zwar technisch deutlich anspruchsvoller, lässt sich aber auch bei Kraftmessplatten einsetzen, die nur sehr kleine Bewegungsamplituden zulassen oder die besonders korrosionsgefährdet sind. Der Grund liegt dabei darin, dass die Abstände zwischen Riegel und Passstelle bei der aktiven Überlastsicherung sich nicht an den zulässigen Bewegungsamplituden orientieren müssen und also viel größer gewählt werden können.

### Bezugszeichenliste

- 1: Grundplatte
- 2: Deckplatte
- 3: Fester unbeweglicher Teil
- 4: Beweglicher Teil
- 5: rohrartige Verformungszone, Rohrwand
- 6: Dehnmessstreifen
- 7: Kühlmittelversorgung
- 8: Kühlkanal
- 9: Temperatursensor mit Anschlussleitung
- 10: Anschlag Z
- 11: Anschlag X
- 12: Anschlag Y
- 13: Sensorfuß
- 14: Messkörper
- 15: Mittelachse
- 16: Applikationsfläche
- 17: Fluid
- 18: Begrenzungsring

### Figurenbeschreibung

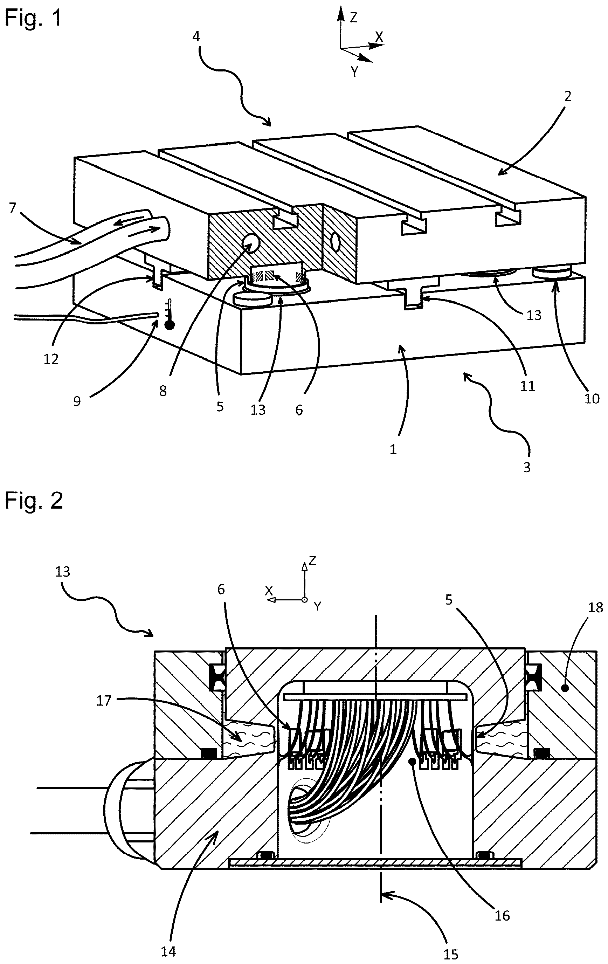

Figur 1 zeigt eine vereinfachte räumliche Darstellung einer erfindungsgemäßen Kraftmessplatte. Diese besitzt eine fest mit einer Maschine verbundene Grundplatte 1, darüber eine Deckplatte 2, welche mit der Grundplatte 1 über vier rohrartige Abschnitte fest miteinander verbunden ist. In einer realen Ausführung dieser Kraftmessplatte wären die vier rohrartigen Abschnitte als eigenständige Bauteile, die sogenannten Sensorfüße 13 ausgeführt, wie sie in Figur 2 näher beschrieben sind. Die rohrartigen Abschnitte besitzen jeweils einen Bereich mit einer gleichbleibenden Wandstärke, welche die rohrartigen Verformungszonen 5 bilden und auf deren Innenseite jeweils Dehnmessstreifen 6 zur Erfassung von Längs- und Querverformungen der rohrartigen Verformungszonen 5 angeordnet sind. Weiterhin erkennbar ist eine Einrichtung zur Temperierung der Deckplatte 2 bestehend aus der Kühlmittelversorgung 7 mit einem Zu- und einem Ablaufschlauch für ein flüssiges Kühlmedium, sowie den durch die Deckplatte 2 verlaufenden Kühlkanälen 8. In der Grundplatte 1 befindet sich außerdem ein Temperatursensor mit einer Anschlussleitung 9, dessen Messwerte von einer Steuerungseinrichtung dazu genutzt werden können, die Temperatur des durch die Deckplatte 2 fließenden Kühlmediums in Abhängigkeit von der Grundplattentemperatur zu regeln. Außerdem kann mindestens ein zweiter, hier nicht dargestellter Temperatursensor in der Deckplatte 2 dazu verwendet werden, zusätzlich den Unterschiedswert der Temperaturen von Grundplatte 1 und Deckplatte 2 zu ermitteln und in Abhängigkeit dieses Unterschiedswertes die Vorlauftemperatur und oder die Durchflussmenge des Kühlmediums zu regeln. Die Werte der Temperatursensoren können außerdem dazu verwendet werden, die augenblickliche Messgenauigkeit der Kraftsensoren zu beurteilen und/oder durch Berechnung der Temperaturwirkungen mittels Korrekturwerten zu erhöhen. Weiterhin dargestellt sind mechanische Anschläge 10, 11 und 12 für die Achsrichtungen X, Y und Z, welche die Bewegungen der Deckplatte 2 auf unkritische Amplituden begrenzen und so einer Zerstörung der rohrartigen Verformungszonen 5 bei einer Kollision vorbeugen.

Figur 2 zeigt einen Schnitt durch einen von vier Sensorfüßen 13, welche bei einer erfindungsgemäßen Kraftmessplatte die Grundplatte 1 und die Deckplatte 2 miteinander verbinden. Der Sensorfuß 13 besitzt einen Messkörper 14 mit zwei flanschartigen Abschnitten oben und unten und einem dünnwandigen zylindrischen Bereich in der Mitte, welcher die rohrartige Verformungszone 5 bildet, und dessen Innenseite die Applikationsfläche 16 für die Dehnmessstreifen 6 bildet. Die Außenseite der rohrartigen Verformungszone 5 ist mit einem Fluid 17 beaufschlagt, welches die von den Dehnmessstreifen erzeugte Verlustwärme, sowie die aufgrund innerer Reibung bei Wechselbelastungen entstehende Wärme von der Rohrwand 5 abführt und an die beiden massiven flanschartigen Abschnitte ober- und unterhalb der rohrartigen Verformungszone, sowie an einen äußeren Begrenzungsring 18 abgibt. Entsprechend einer vorteilhaften, nicht dargestellten Weiterbildung der Erfindung ist der Begrenzungsring 18 ebenfalls kühlmitteldurchströmt und an eine Temperiereinrichtung angeschlossen, um so einer lokalen Erwärmung der Kraftmessplatte an den Sensorfußpositionen vorzubeugen.

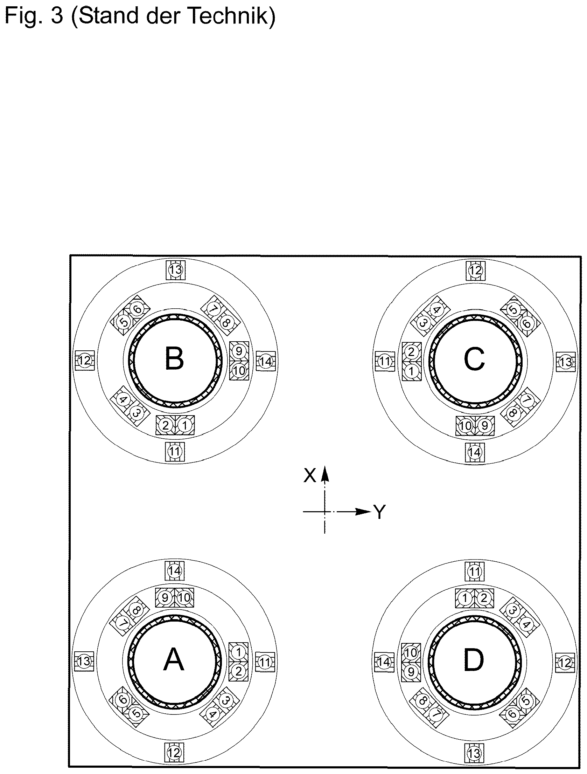

Figur 3 zeigt eine schematische Darstellung einer zum Stand der Technik gehörenden Kraftmessplatte entsprechend den Vorgaben aus der US 4,493,220. Der bewegliche Teil der Kraftmessplatte ist auf der Höhe der vier rohrartigen Verformungszonen abgeschnitten und gibt den Blick auf die vier im Quadrat angeordneten Sensorfüße A, B, C und D frei. Im Interesse einer besseren Darstellung sind die eigentlich an der Zylinderwand der rohrartigen Verformungszonen applizierten Dehnmessstreifen in der Aufsicht gezeichnet und ringartig um die Sensorfüße herum angeordnet. Dabei entspricht die Winkelposition der gezeigten DMS jedoch der realen Winkelposition auf der rohrartigen Verformungszone. Da bei der in US 4,493,220 beschriebenen Lösung die DMS teilweise übereinander in zwei Höhenebenen angeordnet sind, wurde in Figur 3 eine Darstellung mit zwei konzentrischen Ringen mit DMS gewählt, welche diesen beiden Höhenebenen entsprechen. Die Anordnung in zwei Höhenebenen führt in der Praxis dazu, dass auch die rohrartige Verformungszone ausreichend Platz für zwei übereinanderliegende DMS bereitstellen muss, was zu einer größeren Höhe der rohrartigen Verformungszone und in der Folge zu einer geringeren Steifigkeit und einer geringeren Eigenfrequenz führt.

Alle vier Sensorfüße sind gleichartig aufgebaut und besitzen je 14 Einzel-DMS die entsprechend den Vorgaben aus der US 4,493,220 nummeriert sind. Zusätzlich ist deren Orientierung über eine Schraffur angedeutet, dabei symbolisiert eine in Richtung der Mittelachse des Sensorfußes zeigende Schraffur einen Längs-DMS, eine im 90° Winkel dazu stehende Schraffur einen Quer-DMS und eine im 45° Winkel stehende Schraffur einen Scher-DMS. Die Drehlage der Sensorfüße ist so gewählt, dass das für die Erfassung von M_{Z} zuständige DMS-Paar (5,6) jeweils am weitesten vom Zentrumspunkt des Quadrates entfernt liegt und also auf die nächstgelegene Ecke des Quadrates zeigt.

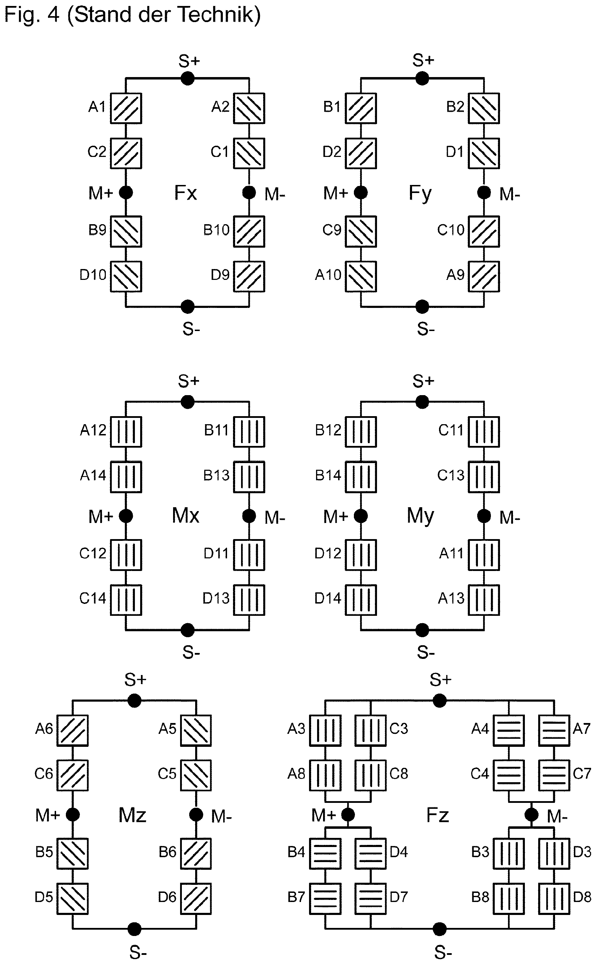

Figur 4 zeigt die Verschaltung der Dehnmessstreifen einer zum Stand der Technik gehörenden Kraftmessplatte gemäß der US 4,493,220. Es sind die sechs Vollbrücken dargestellt, mit denen die Kräfte F_{X}, F_{Y}, F_{Z} und die Momente M_{X}, M_{Y} und M_{Z} erfasst werden. Die Bezeichnung der Einzel-DMS in der Zeichnung folgt dem Schema "Sensorfuß + DMS-Nr." Also zum Beispiel "C11" und ist gleichlautend mit den entsprechenden Kennzeichnungen in der US 4,493,220. Die Schraffur der DMS gibt die Ausrichtung des Messgitters relativ zur Z-Achse wieder. Über die mit S+ und S- gekennzeichneten Anschlüsse wird die Speisespannung eingeleitet. Über die mit M+ und M- gekennzeichneten Anschlüsse wird die Messspannung abgenommen.

Die Vollbrücke für Fz weist vier DMS in jedem Brückenquadranten auf, alle anderen Vollbrücken verschalten zwei DMS in jedem Brückenquadranten. Aufgrund der Reihenschaltung entspricht der Nennwiderstand der Wheatstone-Brücke insgesamt dem doppelten Widerstand der Einzel-DMS. Lediglich bei der Wheatstone-Brücke für Fz entspricht der Nennwiderstand der zwei parallelen Reihenschaltungen auch dem Widerstand der Einzel-DMS. Aufgrund der Reihenschaltungen wird die an S+ und S- anliegende Speisespannung bezogen auf die Einzel-DMS so halbiert. Selbst bei optimaler Wärmeabfuhr und Messverstärkern mit den höchsten handelsüblichen Speisespannungen von 10V kann an den Einzel-DMS daher nicht mehr als die Hälfte dieser Spannung anliegen, wodurch die Möglichkeiten einer Erhöhung der Auflösung durch die Erhöhung der Speisespannung limitiert sind. Ein weiterer Nachteil besteht darin, dass die Verschaltung der Wheatstonebrücken immer DMS aller vier Sensorfüße einschließt. Dies bedeutet einerseits einen großen Verkabelungsaufwand und erhöht somit andererseits die Störanfälligkeit durch elektromagnetische Fremdeinstrahlung. Diese Verschaltungsart lässt es auch nicht zu, eine lokale Überlast an einem einzelnen Sensorfuß festzustellen, da immer die Lasten aller vier Sensorfüße gemittelt werden. Diese Verschaltung führt weiterhin dazu, dass die Kraftmessplatte nur insgesamt im voll aufgebauten Zustand kalibriert werden kann. Eine Kalibrierung der einzelnen Sensorfüße ist vor dem Einbau nicht möglich. Dieser Umstand hat eine ganze Reihe von Folgen, die die Kraftmessplatte teurer, die Wartung komplizierter und die Verlässlichkeit der Messergebnisse geringer macht.

Figur 5 zeigt demgegenüber eine erfindungsgemäße Anordnung von Dehnmessstreifen auf den Sensorfüßen. Eine übereinanderliegende Anordnung in zwei Höhenebenen ist dabei nicht erforderlich, wodurch die rohrartige Verformungszone 5 der Sensorfüße kürzer gehalten werden kann. Um jeden der Sensorfüße A, B, C und D herum sind 16 DMS dargestellt, wobei die gestrichelt dargestellten Dehnmessstreifen in der einfachsten Ausbaustufe der Erfindung nicht vorhanden sind. Diese werden lediglich benötigt, wenn die Auflösung durch Erhöhung der Redundanz mittels weiterer unabhängiger Messkanäle erhöht werden soll. Somit bleiben pro Sensorfuß 8 DMS, von denen je vier die Verformungen in Z-Richtung erfassen und die anderen vier DMS eine Scherverformung der rohrartigen Verformungszone in X-Richtung (bei B und D) oder in Y-Richtung (bei A und C) erfassen. Anders als bei der Darstellung in Figur 3 sind die DMS nicht durchnummeriert, sondern über die Erfassungsrichtung und eine Positionszahl von 1 bis 4 gekennzeichnet also z.B. X4. Die vier Sensorfüße sind dabei baugleich, lediglich die Einbaulage entscheidet über die Erfassungsrichtung in X und Y.

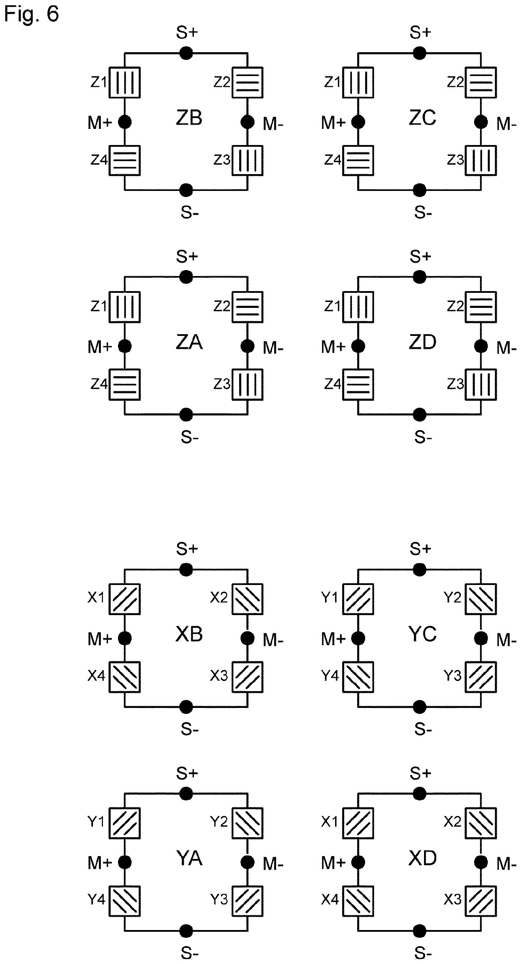

Figur 6 zeigt die Verschaltung der in Figur 5 dargestellten bevorzugten Ausführungsform der Erfindung. Hierbei wird jede Wheatstonebrücke nur von den DMS eines einzelnen Sensorfußes gespeist. Anders als bei der Darstellung in Figur 4 können die Wheatstonebrücken nicht über die erfasste Kraftrichtung eindeutig bezeichnet werden, da jede der drei Kraftrichtung F_{X}, F_{Y} und F_{Z} von mehreren Wheatstonebrücken erfasst wird. Stattdessen werden die Wheatstone-Brücken nach der erfassten Kraftkomponente (z.B. X) und der Position des zugeordneten Sensorfußes (A, B, C, D) benannt also zum Beispiel "ZA". Insgesamt werden 8 Wheatstonebrücken mit jeweils 4 DMS aufgebaut, welche entsprechend dem in Figur 5 verwendeten Benennungsschema gekennzeichnet sind. Jeder Wheatstonebrücke ist ein Verstärkerkanal zugeordnet. Es ergeben sich somit vier Verstärkerkanäle für einwirkende Kräfte in Z (ZA, ZB, ZC und ZD), sowie zwei Kanäle in X (XB und XD) und zwei Kanäle in Y (YA und YC). Diese Anordnung ermöglicht es einer (nicht dargestellten) Auswerteeinheit die Lasten auf allen vier Sensorfüßen einzeln zu erfassen und beugt so einer lokalen Überlast vor. Durch die unabhängige Erfassung von Kräften in X und Y Richtung in diagonal gengenüberliegenden Sensorfüßen ist es auch möglich, die Ausdehnung der Deckplatte aufgrund einer Erwärmung festzustellen und den Messbereich um die so erzeugte Vorspannung zu reduzieren. Alle Vollbrücken werden innerhalb des Sensorkopfes verschaltet, wodurch nur noch 8 Litzen pro Sensorfuß erforderlich sind und so die Voraussetzung für eine effektive elektromagnetische Abschirmung geschaffen wird.

Die Kräfte FX, FY und FZ sowie die Momente M_{X}, M_{Y} und M_{Z} werden aus der Zusammenschau der Messwerte ermittelt. Dabei ergibt sich
F_{X} aus XB + XD
F_{Y} aus YA + YC
FZ aus ZA + ZB + ZC + ZD
M_{X} aus (ZA + ZB) - (ZC + ZD)
M_{Y} aus (ZA + ZD) - (ZB + ZC)
MZ aus ((XB - XD) + (YA - YC)

Die so geschaffene mehrfache Redundanz der Messwerte führt zu einer erhöhten Auflösung. Auch liegt an allen DMS die volle Speisespannung an, was im Zusammenspiel mit einer erfindungsgemäßen Kühlung die Verwendung von 10V Speisespannung an allen DMS zulässt und so nochmals zu einer Erhöhung der Auflösung beiträgt. Durch die Beschaltung der in Figur 5 gestrichelt dargestellten DMS ergeben sich theoretisch vier weitere Kanäle für Z (ZA2, ZB2,...) zwei weitere Kanäle für X (XA und XC) und zwei weitere Kanäle für Y (YB und YC). Diese erhöhen die Redundanz noch einmal und können für Aufbauten mit besonderen Anforderungen an die Zuverlässigkeit und Genauigkeit sinnvoll sein. Allerdings erhöhen sich durch die zusätzlichen Kanäle auch der Verkabelungsaufwand und die Kosten für die Verstärkung und die Auswertung der Messwerte.

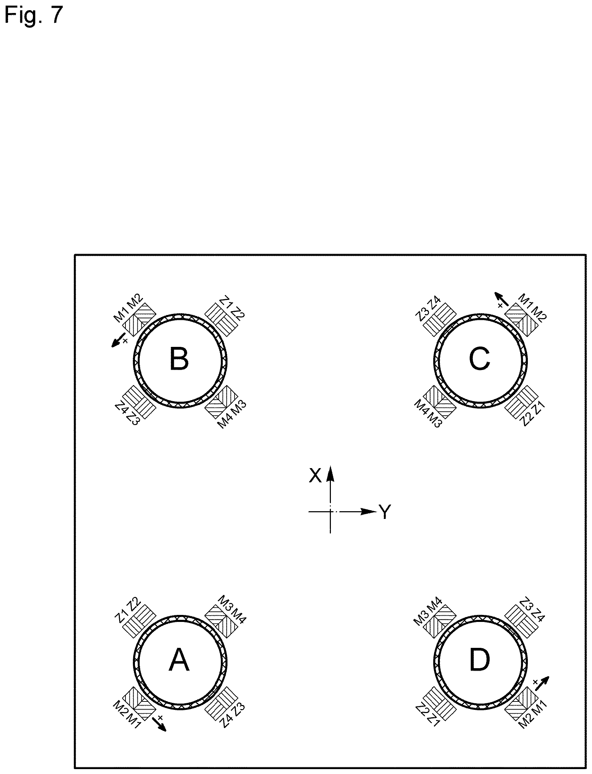

Figur 7 zeigt eine weitere vorteilhafte Ausführungsform der Erfindung. Dabei werden gegenüber der in Figur 5 dargestellten Ausführungsform die für die Erfassung der Scherverformungen der rohrartigen Verformungszonen 5 genutzten DMS nicht in Richtung der Achsen X oder Y ausgerichtet, sondern erfassen Verformungen aufgrund von Kraftwirkungen, welche im 45° Winkel zu den Achsrichtungen X und Y stehen. Eine solche Anordnung der DMS wird beispielsweise in der zum Stand der Technik gehörenden und in Figur 3 dargestellten Lösung zur Erfassung von Drehmomenten M_{Z} eingesetzt. Aus diesem Grund wurden die DMS mit der Bezeichnung M versehen. Die Anordnung der DMS für die Z-Richtung entspricht dabei der in Figur 5 dargestellten Lösung. Die Eigenschaften und Vorteile dieser Lösung sind im Wesentlichen mit der in Figur 5 beschriebenen Lösung identisch, jedoch ergibt sich eine andere Matrix bei der Berechnung der Kräfte F_{X}, F_{Y} und des Moments M_{Z}. Ein Vorteil dieser Anordnung ist es, dass sie eine gleichmäßige Verteilung der DMS auf der Applikationsfläche zulässt, was insbesondere bei miniaturisierten Varianten vorteilhaft sein kann. Auch liefert sie in Bezug auf M_{Z} gegenüber der in Figur 5 dargestellten Lösung einen etwas höheren Signalpegel.

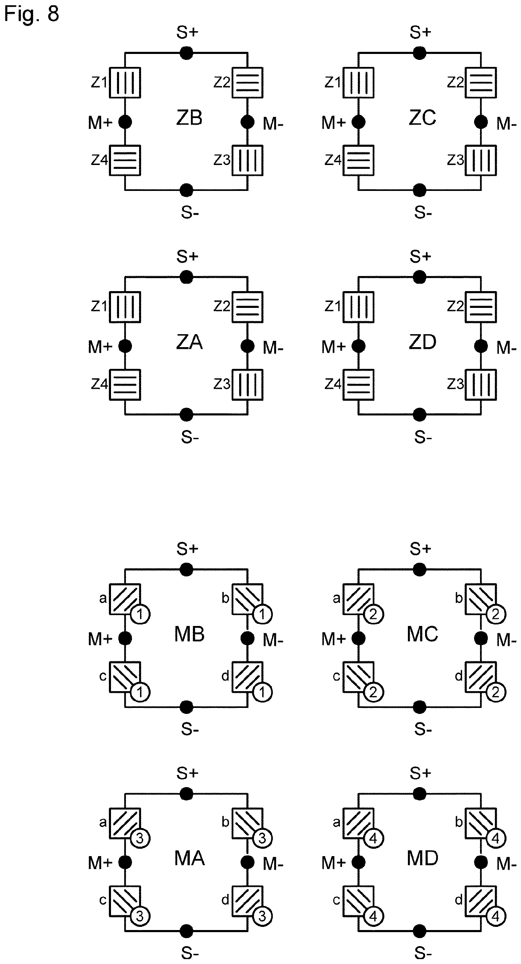

Figur 8 zeigt die Beschaltung der in Figur 7 dargestellten Lösung. Die Wheatstonebrücken zur Erfassung der Kraftwirkungen in Z-Richtung (ZA, ZB, ZC und ZD) sind dabei identisch mit der in Figur 6 beschriebenen Lösung, die Wheatstonebrücken für die Erfassung von Scherverformungen in der XY-Ebene sind mit MA, MB, MC und MD bezeichnet. Der zweite Buchstabe liefert dabei die Zuordnung zu dem entsprechenden Sensorfuß.

Die Kräfte FX, FY und FZ sowie die Momente Mx, M_{Y} und M_{Z} werden wiederum aus der Zusammenschau der Messwerte ermittelt. Dabei ergibt sich
F_{X} aus MC + MB -MA - MB
F_{Y} aus MA + MD - MB - MC
FZ aus ZA + ZB + ZC + ZD
M_{X} aus (ZA + ZB) - (ZC + ZD)
M_{Y} aus (ZA + ZD) - (ZB + ZC)
MZ aus MA + MB + MC + MD

Diese Verschaltung basiert auf der Orientierung der positiven Auslenkungsrichtung, wie sie in Figur 7 durch die Pfeile neben dem DMS M1 beschrieben sind.

## Patentansprüche

1. Verfahren zur mehrachsigen Erfassung einwirkender Kräfte und Momente mittels einer Kraftmessplatte, wobei die Kraftmessplatte besteht aus einer Deckplatte (2), über die die zu messenden Kräfte eingeleitet werden, einer Grundplatte (1) über welche diese eingeleiteten Kräfte aufgenommen und abgeleitet werden und zwei oder mehr Sensorfüßen (13), welche die Deckplatte (2) mit der Grundplatte (1) verbinden und welche einen Messkörper (14) mit einer rohrartigen Verformungszone (5) aufweisen, auf dessen äußerer oder innerer Zylinderfläche Dehnmessstreifen (6) appliziert sind, welche die von den auf die Deckplatte (2) einwirkenden Kräften hervorgerufenen Verformungen der rohrartigen Verformungszonen (5) der Sensorfüße (13) erfassen, wobei die Z-Richtung der einwirkenden Kräfte parallel zu den Mittelachsen (15) der rohrartigen Verformungszonen (5) der Sensorfüße (13) verläuft, wobei die Verformungen der rohrartigen Verformungszonen (5) der Sensorfüße (13) aufgrund der in Z-Richtung einwirkenden Kräfte für jeden einzelnen Sensorfuß (13) von Dehnmessstreifen (6) erfasst und über mindestens je einen separaten Messverstärkerkanal die Messwerte einer angeschlossenen Auswerteeinheit zugeführt werden, und die einem Sensorfuß (13) zugeordneten Messwerte zum Zwecke der Erkennung lokaler Lastereignisse von dieser Auswerteeinheit einzeln beurteilt, ausgegeben und/oder angezeigt werden und parallel die ermittelten Einzellasten aller Sensorfüße (13) in der Auswerteeinheit zum Zwecke der Ermittlung einer Gesamtlast miteinander verrechnet werden und diese Gesamtlast ebenfalls beurteilt, ausgegeben und/oder angezeigt wird,
wobei das Verfahren mit einer Kraftmessplatte mit vier Sensorfüßen (13) durchgeführt wird, bei der die Sensorfüße (13) auf den Eckpunkten eines gedachten Rechtecks angeordnet sind und die in Z-Richtung auf jeden einzelnen Sensorfuß (13) einwirkenden Kräfte getrennt voneinander erfasst und von der Auswerteeinheit gemeinsam verarbeitet und zur Ermittlung der mindestens einer der Kippmomente M_{X} oder M_{Y} herangezogen werden, **dadurch gekennzeichnet, dass** jeder Sensorfuß (13) mindestens zwei jeweils mit vier Dehnmessstreifen als Vollbrücken ausgeführte Wheatstonebrücken besitzt, von denen mindestens eine die Kraftwirkungen des jeweiligen Sensorfußes (13) in Z-Richtung und mindestens eine weitere die Kraftwirkungen in der XY-Ebene ermittelt, wobei sich mindestens je eine gleich ausgerichtete in der XY-Ebene wirksame Anordnung von Dehnmessstreifen auf den diagonal gegenüberliegenden Sensorfüssen (13) des gedachten Rechtecks befindet, und sich mindestens je eine in der XY-Ebene lotrecht zueinander ausgerichtete Anordnung von Dehnmessstreifen auf benachbarten Sensorfüssen (13) befindet, und dass jede Wheatstonebrücke in einem eigenen Kanal ausgewertet wird und somit eine mindestens achtkanalige Auswertung erfolgt, und dass die mindestens vier in der XY-Ebene wirksamen Anordnungen von Dehnmessstreifen zur Ermittlung der auf die Kraftmessplatte einwirkenden Kräfte in X-Richtung und in Y- Richtung dienen und bedarfsweise auch zur Ermittlung des auf die Kraftmessplatte einwirkenden Drehmomentes M_{Z} herangezogen werden können.

2. Kraftmessplatte zur mehrachsigen Erfassung einwirkender Kräfte und Momente bestehend aus einer Deckplatte (2), über die die zu messenden Kräfte eingeleitet werden, einer Grundplatte (1), über welche diese eingeleiteten Kräfte aufgenommen und abgeleitet werden und zwei oder mehr Sensorfüßen (13), welche die Deckplatte (2) mit der Grundplatte (1) verbinden und welche einen Messkörper (14) mit einer rohrartigen Verformungszone (5) aufweisen, auf dessen äußerer oder innerer Zylinderfläche Dehnmessstreifen (6) appliziert sind, welche die von den auf die Deckplatte (2) einwirkenden Kräften hervorgerufenen Verformungen der rohrartigen Verformungszonen (5) der Sensorfüße (13) erfassen, wobei die Z-Richtung der einwirkenden Kräfte parallel zu den Mittelachsen (15) der rohrartigen Verformungszonen (5) der Sensorfüße (13) verläuft, wobei die Kraftmesseinrichtung zur Erfassung der Verformungen der rohrartigen Verformungszonen (5) der Sensorfüße (13) aufgrund der in Z-Richtung einwirkenden Kräfte für jeden einzelnen Sensorfuß (13) durch die Dehnmessstreifen (6) und zur Zuführung der Messwerte über mindestens je einen separaten Messverstärkerkanal an eine angeschlossene Auswerteeinheit ausgebildet ist, wobei die Auswerteeinheit dazu ausgebildet ist, die einem Sensorfuß (13) zugeordneten Messwerte zum Zwecke der Erkennung lokaler Lastereignisse einzeln zu beurteilen, auszugeben und/oder anzuzeigen und parallel die ermittelten Einzellasten aller Sensorfüße (13) zum Zwecke der Ermittlung einer Gesamtlast miteinander zu verrechnen und diese Gesamtlast ebenfalls zu beurteilen, auszugeben und/oder anzuzeigen, wobei
die Kraftmessplatte vier Sensorfüße (13) aufweist, die auf den Eckpunkten eines gedachten Rechtecks angeordnet sind und die Kraftmessplatte dazu ausgebildet ist, in Z-Richtung auf jeden einzelnen Sensorfuß (13) einwirkende Kräfte getrennt voneinander zu erfassen, wobei die Auswerteeinheit dazu ausgebildet ist, diese Kräfte gemeinsam zu verarbeiten und zur Ermittlung der mindestens einer der Kippmomente M_{X} oder M_{Y} heranzuziehen **dadurch gekennzeichnet, dass** jeder Sensorfuß (13) mindestens zwei jeweils mit vier Dehnmessstreifen als Vollbrücken ausgeführte Wheatstonebrücken besitzt, von denen mindestens eine zur Ermittlung der Kraftwirkungen des jeweiligen Sensorfußes (13) in Z-Richtung und mindestens eine weitere zur Ermittlung der Kraftwirkungen in der XY-Ebene dient, wobei sich mindestens je eine gleich ausgerichtete in der XY-Ebene wirksame Anordnung von Dehnmessstreifen auf den diagonal gegenüberliegenden Sensorfüssen (13) des gedachten Rechtecks befindet, und sich mindestens je eine in der XY-Ebene lotrecht zueinander ausgerichtete Anordnung von Dehnmessstreifen auf benachbarten Sensorfüssen (13) befindet, und dass jede Wheatstonebrücke in einem eigenen Kanal ausgewertet wird und somit eine mindestens achtkanalige Auswertung erfolgt, und dass die mindestens vier in der XY-Ebene wirksamen Anordnungen von Dehnmessstreifen zur Ermittlung der auf die Kraftmessplatte einwirkenden Kräfte in X-Richtung und in Y- Richtung dienen und bedarfsweise auch zur Ermittlung des auf die Kraftmessplatte einwirkenden Drehmomentes Mz herangezogen werden können.

3. Kraftmessplatte nach Anspruch 2, **dadurch gekennzeichnet,**
**dass** sie einen festen, unbeweglichen Teil (3), zu dem die Grundplatte (1) gehört, und einen beweglichen Teil (4), zu dem die Deckplatte (2) gehört, aufweist, wobei der feste Teil (3) und der bewegliche Teil (4) über die rohrartigen Verformungszonen (5) der Sensorfüße (13) miteinander verbunden sind.

4. Kraftmessplatte nach Anspruch 3, **dadurch gekennzeichnet,**
**dass** die Kraftmessplatte in ihrem festen, unbeweglichen Teil (3) und in ihrem beweglichen Teil (4) jeweils mindestens einen Temperatursensor (9) besitzt, und die Auswerteeinheit dazu ausgebildet ist, einen Temperaturunterschiedswert zwischen dem beweglichen und dem unbeweglichen Teil der Kraftmessplatte zu ermitteln, wobei dieser Temperaturunterschiedswert von der Auswerteeinheit für eine Korrektur der ermittelten Kraftwerte und/oder zur Steuerung einer die Kraftmessplatte oder Teile davon temperierenden Einrichtung herangezogen wird.

5. Kraftmessplatte nach Anspruch 4, **dadurch gekennzeichnet,**
**dass** mindestens der bewegliche Teil (4) der Kraftmessplatte mit einer Einrichtung zur Temperierung ausgestattet ist, welche in der Lage ist, einen Temperaturunterschiedswert zwischen festem und beweglichem Teil der Kraftmessplatte zu verringern.

6. Kraftmessplatte nach dem vorangegangenen Anspruch 5, **dadurch gekennzeichnet, dass** im unbeweglichen Teil (3) der Kraftmessplatte ein Temperatursensor (9) angebracht ist, und die Messwerte dieses Temperatursensors (9) zur Steuerung einer Einrichtung zur Temperierung der Kraftmessplatte dienen, die überwiegend auf den beweglichen Teil (4) der Kraftmessplatte wirkt.

7. Kraftmessplatte nach einem der vorangegangenen Ansprüche 3 bis 6, **dadurch gekennzeichnet,**
**dass** dem festen, unbeweglichen Teil (3) der Kraftmessplatte ein oder mehrere Messwertgeber zur Bestimmung der Neigung und/oder der Beschleunigung und/oder der Drehrate beigeordnet sind und die Auswerteeinheit dazu ausgebildet ist, die Messwerte dieser Messwertgeber zur Korrektur der ermittelten Kraft- und Momentenwerte zu verwenden.

8. Kraftmessplatte nach einem der vorangegangenen Ansprüche 2 bis 7, **dadurch gekennzeichnet, dass** die einer Applikationsfläche für die Dehnmessstreifen (6) gegenüberliegende innere oder äußere Wand der rohrartigen Verformungszonen (5) der Sensorfüße (13) mit einem Fluid (17) beaufschlagt ist und dieses Fluid mit einem anderen Teil des jeweiligen Sensorfußes (13), der Kraftmessplatte und/oder der Maschine, mit welcher die Kraftmessplatte betrieben wird, in thermischen Kontakt steht, so dass sich über dieses Fluid (17) ein Temperaturausgleich zwischen der jeweiligen rohrartigen Verformungszone (5) und diesem anderen Teil ergibt.

9. Kraftmessplatte nach einem der vorangegangenen Ansprüche 3 bis 8, **dadurch gekennzeichnet, dass** die Kraftmessplatte für eine oder mehrere Achsrichtungen mechanische Anschläge (10,11,12) aufweist, welche so bemessen sind, dass sie eine Verschiebung des beweglichen Teils (4) relativ zum festen, unbeweglichen Teil (3) der Kraftmessplatte maximal innerhalb der Dehngrenzen eines verwendeten federelastischen Materials der rohrartigen Verformungszonen (5) zulassen.

10. Kraftmessplatte nach dem vorangegangenen Anspruch 9, **dadurch gekennzeichnet, dass** die Anschlagflächen durch elastische Dichtungen von umgebenden Fluiden und Stäuben geschützt sind.

## Claims

1. A method for the multi-axis acquisition of acting forces and moments by means of a force measuring plate, wherein the force measuring plate consists of a cover plate (2) via which the forces to be measured are introduced, a base plate (1) via which these introduced forces are absorbed and dissipated, and two or more sensor feet (13) connecting the cover plate (2) with the base plate (1) and having a measuring body (14) with a tube-like deformation zone (5), to whose outer or inner cylinder surface strain gauges (6) are applied, which acquire the deformations of the tube-like deformation zones (5) of the sensor feet (13) caused by the forces acting on the cover plate (2), wherein the Z-direction of the acting forces extends parallel to the central axes (15) of the tube-like deformation zones (5) of the sensor feet (13),
wherein the deformations of the tube-like deformation zones (5) of the sensor feet (13) caused by the forces acting in the Z-direction is acquired for each individual sensor foot (13) by strain gauges (6) and the measured values are fed to a connected evaluation unit via, in each case, one separate measurement amplifier channel, and the measured values associated with a sensor foot (13) are individually assessed, outputted and/or displayed by this evaluation unit for the purpose of recognizing local loading events, and, in parallel, the determined individual loads of all sensor feet (13) are set off against each other in the evaluation unit for the purpose of determining a total load, and this total load is also assessed, outputted and/or displayed,
wherein the method is carried out with a force measuring plate with four sensor feet (13) in which the sensor feet (13) are disposed on the corner points of an imaginary rectangle and the forces acting in the Z-direction on each individual sensor foot (13) are acquired separately from one another and processed together by the evaluation unit and used for determining the at least one of the tilting moments M_{X} or M_{Y}, **characterized in that** each sensor foot (13) includes at least two Wheatstone bridges which are configured, in each case with four strain gauges, as full bridges, and of which at least one determines the actions of forces of the respective sensor foot (13) in the Z-direction and at least one other the actions of forces in the XY-plane, wherein in each case at least one identically oriented arrangement of strain gauges operative in the XY-plane is located on the diagonally opposite sensor feet (13) of the imaginary rectangle, and in each case at least one arrangement of strain gauges oriented at right angles to each other in the XY-plane is located on adjacent sensor feet (13), and that each Wheatstone bridge is evaluated in its own channel and thus, an at least eight-channel evaluation is carried out, and that the at least four arrangements of strain gauges operative in the XY-plane serve for determining the forces in the X-direction and the Y-direction acting on the force measuring plate and, as required, can also be used for determining the torque M_{Z} acting on the force measuring plate.

2. A force measuring plate for the multi-axis acquisition of acting forces and moments, consisting of a cover plate (2) via which the forces to be measured are introduced, a base plate (1) via which these introduced forces are absorbed and dissipated, and two or more sensor feet (13) connecting the cover plate (2) with the base plate (1) and having a measuring body (14) with a tube-like deformation zone (5), to whose outer or inner cylinder surface strain gauges (6) are applied, which acquire the deformations of the tube-like deformation zones (5) of the sensor feet (13) caused by the forces acting on the cover plate (2), wherein the Z-direction of the acting forces extends parallel to the central axes (15) of the tube-like deformation zones (5) of the sensor feet (13),
wherein the force measuring device is configured for acquiring the deformations of the tube-like deformation zones (5) of the sensor feet (13) caused by the forces acting in the Z-direction for each individual sensor foot (13) by means of the strain gauges (6) and for feeding the measured values to a connected evaluation unit via, in each case, one separate measurement amplifier channel, wherein the evaluation unit is configured for individually assessing, outputting and/or displaying the measured values associated with a sensor foot (13) for the purpose of recognizing local loading events, and for setting off, in parallel, the determined individual loads of all sensor feet (13) for the purpose of determining a total load, and for also assessing, outputting and/or displaying this total load, wherein
the force measuring plate has four sensor feet (13) disposed on the corner points of an imaginary rectangle, and the force measuring plate is configured for acquiring forces acting in the Z-direction on each individual sensor foot (13) separately from one another, wherein the evaluation unit is configured for processing these forces together and use them for determining the at least one of the tilting moments M_{X} or M_{Y},
**characterized in that** each sensor foot (13) includes at least two Wheatstone bridges which are configured, in each case with four strain gauges, as full bridges, and of which at least one serves for determining the actions of forces of the respective sensor foot (13) in the Z-direction and at least one other serves for determining the actions of forces in the XY-plane, wherein in each case at least one identically oriented arrangement of strain gauges operative in the XY-plane is located on the diagonally opposite sensor feet (13) of the imaginary rectangle, and in each case at least one arrangement of strain gauges oriented at right angles to each other in the XY-plane is located on adjacent sensor feet (13), and that each Wheatstone bridge is evaluated in its own channel and thus, an at least eight-channel evaluation is carried out, and that the at least four arrangements of strain gauges operative in the XY-plane serve for determining the forces in the X-direction and the Y-direction acting on the force measuring plate and, as required, can also be used for determining the torque M_{Z} acting on the force measuring plate.

3. The force measuring plate according to claim 2, **characterized in that**
it has a fixed, non-movable part (3) to which the base plate (1) belongs, and a movable part (4) to which the cover plate (2) belongs, wherein the fixed part (3) and the movable part (4) are connected to each other via the tube-like deformation zones (5) of the sensor feet (13).

4. The force measuring plate according to claim 3, **characterized in that**
the force measuring plate has in its fixed, non-movable part (3) and in its movable part (4) at least one temperature sensor (9) each, and the evaluation unit is configured for determining a temperature difference value between the movable and non-movable parts of the force measuring plate, wherein this temperature difference value is used by the evaluation unit for correcting the determined force values and/or for controlling a device temperature-regulating the force measuring plate of parts thereof.

5. The force measuring plate according to claim 4, **characterized in that**
that at least the movable part (4) of the force measuring plate is equipped with a device for temperature regulation, which is capable of reducing a temperature difference value between the fixed and movable parts of the force measuring plate.

6. The force measuring plate according to the preceding claim 5, **characterized in that** a temperature sensor (9) is mounted in the non-movable part (3) of the force measuring plate, and the measured values of this temperature sensor (9) serve for controlling a device for temperature-regulating the force measuring plate which predominantly acts on the movable part (4) of the force measuring plate.

7. The force measuring plate according to any one of the preceding claims 3 to 6, **characterized in that**
one or more measuring transducers for determining the inclination and/or acceleration and/or the rate of rotation are assigned to the fixed, non-movable part (3) of the force measuring plate, and the evaluation unit is configured for using the measured values of these measuring transducers for correcting the determined force and moment values.

8. The force measuring plate according to any one of the preceding claims 2 to 7, **characterized in that** a fluid (17) is placed against an inner or outer wall of the tube-like deformation zone (5) of the sensor feet (13), which is opposite the application surface of the strain gauges (6), and this fluid is in thermal contact with another part of the respective sensor foot (13), the force measuring plate and/or the machine with which the force measuring plate is operated, so as to result in a temperature compensation via this fluid (17) between the respective tube-like deformation zone (5) and this other part.

9. The force measuring plate according to any one of the preceding claims 3 to 8, **characterized in that** the force measuring plate has, for one or more axial directions, mechanical stops (10, 11, 12) dimensioned in such a way that they permit a displacement of the movable part (4) relative to the fixed, non-movable part (3) of the force measuring plate, at most within the yield strengths of an employed spring-elastic material of the tube-like deformation zones (5).

10. The force measuring plate according to the preceding claim 9, **characterized in that** the stop surfaces are protected from surrounding fluids and dusts by elastic seals.

## Revendications

1. Procédé de détection multiaxiale de forces et moments en action, au moyen d'une plaque de mesure de force, ladite plaque de mesure de force étant constituée d'une plaque de recouvrement (2) par laquelle les forces à mesurer sont induites, d'une plaque de base (1) par l'intermédiaire de laquelle ces forces induites sont absorbées et déviées, et de deux ou plusieurs pieds de capteur (13) qui relient la plaque de recouvrement (2) à la plaque de base (1) et qui présentent un corps de mesure (14) ayant une zone de déformation (5) de type tube sur la surface cylindrique externe ou interne duquel sont appliquées des jauges de contrainte (6) qui détectent les déformations des zones de déformation (5) de type tube des pieds de capteur (13) qui sont provoquées par les forces agissant sur la plaque de recouvrement (2), dans lequel la direction Z des efforts en action s'étend parallèlement aux axes centraux (15) des zones de déformation (5) de type tube des pieds de capteur (13),
dans lequel les déformations des zones de déformation (5) de type tube des pieds de capteur (13) dues aux forces agissant dans la direction Z pour chaque pied de capteur (13) individuel sont détectées par des jauges de contrainte (6), et les valeurs de mesure sont fournies via respectivement au moins un canal d'amplificateur de mesure séparé à une unité d'évaluation connectée, et les valeurs de mesure associées à un pied de capteur (13) sont évaluées individuellement dans le but de reconnaître des événements de charge locaux, sorties et/ou affichées par cette unité d'évaluation et, en parallèle, les charges individuelles déterminées de tous les pieds de capteur (13) sont comptées les unes avec les autres dans l'unité d'évaluation afin de déterminer une charge totale, et cette charge totale est évaluée, sortie et/ou affichée elle aussi,
dans lequel le procédé est mis en œuvre au moyen d'une plaque de mesure de force avec quatre pieds de capteur (13) dans laquelle les pieds de capteur (13) sont disposés sur les points d'angle d'un rectangle imaginaire et les forces agissant dans la direction Z sur chaque pied de capteur (13) individuel sont détectées séparément les unes des autres et sont traitées ensemble par l'unité d'évaluation et sont utilisés pour déterminer ledit au moins un des moments de basculement M_{X} ou M_{Y}, **caractérisé par le fait que** chaque pied de capteur (13) comprend au moins deux ponts de Wheatstone, chacun avec quatre jauges de contrainte en tant que ponts complets, dont au moins un détermine les effets de force du pied de capteur (13) respectif dans la direction Z et au moins un autre détermine les effets de force dans le plan XY, dans lequel au moins respectivement un ensemble de jauges de contrainte à orientation identique et efficaces dans le plan XY se trouve sur les pieds de capteur (13) diagonalement opposés du rectangle imaginaire, et au moins respectivement un ensemble de jauges de contrainte orientées perpendiculairement les unes aux autres dans le plan XY est situé sur des pieds de capteur (13) adjacents, et que chaque pont de Wheatstone est évalué dans un propre canal et, ainsi, une évaluation d'au moins huit canaux a lieu, et que lesdits au moins quatre ensembles de jauges de contrainte qui sont efficaces dans le plan XY servent à déterminer les forces agissant sur la plaque de mesure de force dans la direction X et dans la direction Y et, en cas de besoin, peuvent également être utilisés pour déterminer le couple M_{Z} agissant sur la plaque de mesure de force.

2. Plaque de mesure de force destinée à la détection multiaxiale de forces et moments en action, constituée d'une plaque de recouvrement (2) par laquelle les forces à mesurer sont induites, d'une plaque de base (1) par l'intermédiaire de laquelle ces forces induites sont absorbées et déviées, et de deux ou plusieurs pieds de capteur (13) qui relient la plaque de recouvrement (2) à la plaque de base (1) et qui présentent un corps de mesure (14) ayant une zone de déformation (5) de type tube sur la surface cylindrique externe ou interne duquel sont appliquées des jauges de contrainte (6) qui détectent les déformations des zones de déformation (5) de type tube des pieds de capteur (13) qui sont provoquées par les forces agissant sur la plaque de recouvrement (2), dans lequel la direction Z des efforts en action s'étend parallèlement aux axes centraux (15) des zones de déformation (5) de type tube des pieds de capteur (13),
dans laquelle le dispositif de mesure de force est conçu pour détecter les déformations des zones de déformation (5) de type tube des pieds de capteur (13), dues aux forces agissant dans la direction Z, pour chaque pied de capteur (13) individuel par l'intermédiaire des jauges de contrainte (6) et pour fournir les valeurs de mesure via respectivement au moins un canal d'amplificateur de mesure séparé à une unité d'évaluation connectée, ladite unité d'évaluation étant conçue pour évaluer, sortir et/ou afficher individuellement les valeurs de mesure associées à un pied de capteur (13) dans le but de reconnaître des événements de charge locaux et, en parallèle, pour compter les unes avec les autres les charges individuelles déterminées de tous les pieds de capteur (13) afin de déterminer une charge totale, et pour évaluer, sortir et/ou afficher également cette charge totale, dans laquelle
la plaque de mesure de force comprend quatre pieds de capteur (13) qui sont disposés sur les points d'angle d'un rectangle imaginaire, et la plaque de mesure de force est conçue pour détecter séparément les unes des autres des forces agissant dans la direction Z sur chaque pied de capteur (13) individuel, l'unité d'évaluation étant conçue pour traiter ces forces ensemble et pour utiliser celles-ci afin de déterminer ledit au moins un des moments de basculement M_{X} ou M_{Y},
**caractérisée par le fait que** chaque pied de capteur (13) possède au moins deux ponts de Wheatstone, chacun avec quatre jauges de contrainte en tant que ponts complets, dont au moins un sert à déterminer les effets de force du pied de capteur (13) respectif dans la direction Z et au moins un autre sert à déterminer les effets de force dans le plan XY, dans lequel au moins respectivement un ensemble de jauges de contrainte à orientation identique et efficaces dans le plan XY se trouve sur les pieds de détection (13) diagonalement opposés du rectangle imaginaire, et au moins respectivement un ensemble de jauges de contrainte orientées perpendiculairement les unes aux autres dans le plan XY est situé sur des pieds de capteur (13) adjacents, et que chaque pont de Wheatstone est évalué dans un propre canal et, ainsi, une évaluation d'au moins huit canaux a lieu, et que lesdits au moins quatre ensembles de jauges de contrainte qui sont efficaces dans le plan XY servent à déterminer les forces agissant sur la plaque de mesure de force dans la direction X et dans la direction Y et, en cas de besoin, peuvent également être utilisés pour déterminer le couple M_{Z} agissant sur la plaque de mesure de force.

3. Plaque de mesure de force selon la revendication 2, **caractérisée par le fait qu'**elle comprend une partie fixe et immobile (3) à laquelle appartient la plaque de base (1), et une partie mobile (4) à laquelle appartient la plaque de recouvrement (2), dans laquelle la partie fixe (3) et la partie mobile (4) sont reliées entre elles par les zones de déformation (5) de type tube des pieds de capteur (13).

4. Plaque de mesure de force selon la revendication 3, **caractérisée par le fait que** la plaque de mesure de force comprend respectivement au moins un capteur de température (9) dans sa partie fixe et immobile (3) et dans sa partie mobile (4), et l'unité d'évaluation est conçue pour déterminer une valeur de différence de température entre la partie mobile et la partie immobile de la plaque de mesure de force, dans laquelle cette valeur de différence de température est utilisée par l'unité d'évaluation pour corriger les valeurs de force déterminées et/ou pour commander un dispositif qui régule en température la plaque de mesure de force ou des parties de celle-ci.

5. Plaque de mesure de force selon la revendication 4, **caractérisée par le fait qu'**au moins la partie mobile (4) de la plaque de mesure de force est équipée d'un dispositif de thermorégulation qui est capable de réduire une valeur de différence de température entre les parties fixe et mobile de la plaque de mesure de force.

6. Plaque de mesure de force selon la revendication 5 précédente, **caractérisée par le fait qu'**un capteur de température (9) est monté dans la partie immobile (3) de la plaque de mesure de force, et les valeurs de mesure de ce capteur de température (9) servent à commander un dispositif de thermorégulation de la plaque de mesure force, qui agit principalement sur la partie mobile (4) de la plaque de mesure de force.

7. Plaque de mesure de force selon l'une quelconque des revendications 3 à 6 précédentes, **caractérisée par le fait**
**qu'**un ou plusieurs transducteurs sont associés à la partie fixe et immobile (3) de la plaque de mesure de force pour déterminer l'inclinaison et/ou l'accélération et/ou le taux de rotation et que l'unité d'évaluation est conçue pour utiliser les valeurs de mesure de ces transducteurs pour corriger les valeurs de force et de moment déterminées.

8. Plaque de mesure de force selon l'une quelconque des revendications 2 à 7 précédentes, **caractérisée par le fait que** la paroi interne ou externe des zones de déformation (5) de type tube des pieds de capteur (13), qui est opposée à une surface d'application pour les jauges de contrainte (6) est soumise à un fluide (17), et ce fluide est en contact thermique avec une autre partie du pied de capteur (13) respectif, la plaque de mesure de force et/ou la machine au moyen de laquelle la plaque de mesure de force est actionnée, de sorte que ce fluide (17) entraîne une compensation de température entre la zone de déformation (5) de type tube respective et cette autre partie.

9. Plaque de mesure de force selon l'une quelconque des revendications 3 à 8 précédentes, **caractérisée par le fait que** la plaque de mesure de force présente des butées mécaniques (10, 11, 12) pour une ou plusieurs directions axiales, qui sont dimensionnées de manière à ce qu'elles autorisent un déplacement de la partie mobile (4) par rapport à la partie fixe et immobile (3) de la plaque de mesure de force au maximum dans les limites de dilatation d'un matériau élastique utilisé des zones de déformation (5) de type tube.

10. Plaque de mesure de force selon la revendication 9 précédente, **caractérisée par le fait que** les surfaces de butée sont protégées par des joints élastiques contre des fluides et poussières environnants.
